# EUROPEAN PATENT SPECIFICATION

(11) **EP 1 969 663 B1**
(45) Date of publication and mention of the grant of the patent: **23.02.2011**
(21) Application number: 06834871.3
(22) Date of filing: 12.12.2006
(51) Int. Cl.: H01M 8/10, H01M 8/02, H01M 4/86, H01M 4/88

(54) **METHOD FOR MANUFACTURING MEMBRANE ELECTRODE ASSEMBLY AND REINFORCED ELECTROLYTE MEMBRANE IN POLYMER ELECTROLYTE FUEL CELL**
VERFAHREN ZUR HERSTELLUNG EINER MEMBRANELEKTRODENBAUGRUPPE UND VERSTÄRKTE ELEKTROLYTMEMBRAN IN EINER POLYMER-ELEKTROLYT-BRENNSTOFFZELLE
PROCÉDÉ DE FABRICATION D'ENSEMBLE ÉLECTRODE À MEMBRANE ET MEMBRANE ÉLECTROLYTIQUE RENFORCÉE DANS UNE PILE À COMBUSTIBLE ÉLECTROLYTIQUE POLYMÈRE

(30) Priority: 20.12.2005 JP 2005366655
(43) Date of publication of application: 17.09.2008
(73) Proprietor: Toyota Jidosha Kabushiki Kaisha, Toyota-shi, Aichi 471-8571 (JP)
(72) Inventor: SUZUKI, Hiroshi, Toyota-shi, Aichi 471-8571 (JP)
(74) Representative: Kuhnen & Wacker
(86) International application number: PCT/JP2006/325144
(87) International publication number: WO 2007/072765

(56) References cited:
- EP-A- 1 496 561
- EP-A2- 1 643 580
- WO-A-2005/013396
- US-A- 5 761 793
- US-A1- 2005 112 448

## Description

### TECHNICAL FIELD

The present invention relates to a method for manufacturing a membrane electrode assembly and a reinforced electrolyte membrane in a polymer electrolyte fuel cell,

### BACKGROUND ART

A polymer electrolyte fuel cell (PEFC) is known as a mode of fuel cell. Since the operating temperature (approximately 80°C to 100°C) of such polymer electrolyte fuel cell is lower than those of other modes of fuel cells, the cost and size can be reduced. Thus, it is expected as a power source for automobiles or the like.

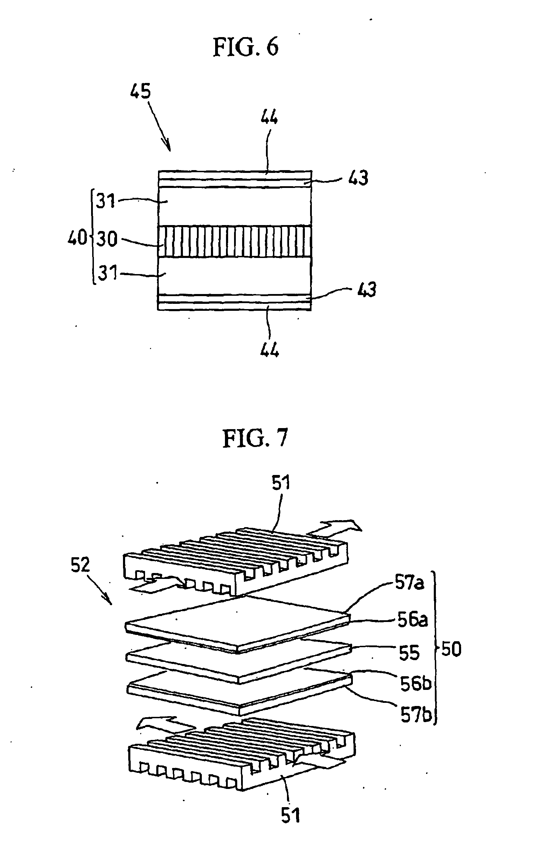

As shown in Fig. 7, the polymer electrolyte fuel cell includes a membrane electrode assembly (MEA) 50 as a principal constituent element, which is sandwiched between separators 51, 51 having fuel (hydrogen) gas channels and air gas channels, so as to form a single fuel cell 52 referred to as a single cell. The membrane electrode assembly 50 has a structure in which an anode-side electrode catalyst layer 56a and a diffusion layer 57a are staked on one side of an electrolyte membrane 55 that is an ion exchange membrane, and a cathode-side electrode catalyst layer 56b and a diffusion layer 57b are staked on the other side of the electrolyte membrane 55.

A thin membrane of perfluorosulfonic acid polymer (Nafion membrane, DuPont co. ltd., USA) that is electrolyte resin (ion exchange resin), is mainly used as the electrolyte membrane 55, and electrode material formed of electrode catalyst and electrolyte resin such as platinum-supported carbon is mainly used as the electrode catalyst layers 56a and 56b. In order to manufacture the membrane electrode assembly (MEA) 50, a method (wet method) is conducted, by which a mixed solution (catalyst ink) of electrode catalyst and electrolyte resin solution is prepared, and the prepared solution is applied to the electrolyte membrane 55 by a screen printing method or the like, followed by drying (see Patent Document 1, for example). Alternatively, another method (dry method) is conducted, by which electrode material prepared utterly in a dry manner or powdery electrode material, which is obtained by drying the above catalyst ink so that the solvent or the like is removed, is transcribed to the electrolyte membrane 5 by utilizing electrostatic force or the like, and the material is then caused to be fixed by a fixing roller (see Patent Document 2, for example).

While there are cases in which a thin membrane of electrolyte resin alone is used for the electrolyte membrane 55 as described above, since sufficient strength cannot be obtained by such electrolyte resin alone, there are also cases in which a porous reinforced membrane (such as a thin membrane formed by stretching PTFE, polyolefin resin, or the like) is impregnated with electrolyte resin solution, so as to form a reinforced electrolyte membrane (see Patent Document 3, for example).
Patent Document 1: JP Patent Publication (Kokai) No. 9-180728 A (1997)
Patent Document 2: JP Patent Publication (Kokai) No. 2002-367616 A
Patent Document 3: JP Patent Publication (Kokai) No. 9-194609 A (1997)

US 2005/112448A1 discloses an adhesion layer containing a second solid polymer electrolyte being disposed between a solid polymer electrolyte membrane and fuel electrode and/or an oxidant electrode containing a first solid polymer electrolyte and a catalyst substance.

The solid polymer electrolyte membrane and the adhesion layer are made of the same solid polymer electrolyte. In this manner, the adhesion at the interface between the electrode surface and the solid polymer electrolyte membrane is enhanced to implement the elevation of the cell characteristics and the elevation of the reliability of the cell.

US 5,761,793 discloses a process for the production of a composite consisting of electrode material, catalyst material and a solid-electrolyte membrane for an electrochemical cell, in particular a fuel cell, with which solid-electrolyte material is brought into pore-deep contact with the electrode material and the catalyst material by softening it, such that this can be carried out as effectively and inexpensively as possible it is suggested that the catalytic powder comprising electrode material, catalyst material and the solid-electrolyte material be produced, that a catalytic layer be produced on a carrier from the catalytic powder, that the catalytic layer be heated on a side facing away from the carrier to soften the solid-electrolyte material and that subsequently the catalytic layer be applied under pressure to the solid-electrolyte membrane while the solid-electrolyte material is softened in order to form a composite.

EP 1 496 561 A2 discloses a laminate useful as a membrane electrode assembly for fuel cells, a production process therefore and a fuel cell provided with the same, wherein the ion exchange membrane layer and the conductive layer are integrated with each other by the above ion exchange resins constituting these layers.

### DISCLOSURE OF THE INVENTION

### PROBLEMS TO BE SOLVED BY THE INVENTION

Regarding such membrane electrode assembly in a polymer electrolyte fuel cell, it is desirable that interface resistance between the electrolyte membrane and the electrode catalyst layer is small in order to obtain high electrical efficiency. However, in either the conventional wet method or dry method, since it is impossible to eliminate the presence of interlayer boundary itself, there are limits to reducing the interface resistance while various methods have been adopted. Further, the electrolyte membrane and the electrode catalyst layer stacked in layers are actively pressurized in the process of manufacture, so as to be integrated with each other. Therefore, damage to the electrolyte membrane cannot be completely prevented.

Furthermore, in cases in which the reinforced electrolyte membrane is used as the electrolyte membrane, while damage to the electrolyte membrane due to pressurization or the like in the process of manufacturing the membrane electrode assembly can be prevented, since pressurization is normally carried out for adequately impregnating the inside of the porous reinforced membrane with electrolyte solution in the process of manufacturing the reinforced electrolyte membrane, damage to the porous reinforced membrane cannot be prevented due to such pressurization.

The present invention has been made in view of the circumstances as described above. It is an object of the present invention to provide a novel method for manufacturing a membrane electrode assembly, by which the membrane electrode assembly in a polymer electrolyte fuel cell can be manufactured in a state in which no boundary is present between the electrolyte membrane and the electrode catalyst layer or in a state substantially equivalent to the state in which no boundary is present since the boundary, if any, is very subtle. Further, another object of the present invention is to provide a novel method for manufacturing a membrane electrode assembly, by which a membrane electrode assembly can be manufactured without causing damage to the electrolyte membrane. Furthermore, another object is to provide a membrane electrode assembly manufactured by such manufacturing method. Thus, a membrane electrode assembly with high electrical efficiency in a polymer electrolyte fuel cell can be obtained.

Further, as a method for manufacturing a reinforced electrolyte membrane used in the membrane electrode assembly in a polymer electrolyte fuel cell, another object of the present invention is to provide a novel manufacturing method by which a reinforced electrolyte membrane can be manufactured without causing damage to a porous reinforced membrane. Furthermore, another object is to provide a reinforced electrolyte membrane manufactured by such manufacturing method. By using such undamaged reinforced electrolyte membrane, a membrane electrode assembly with high electrical efficiency in a polymer electrolyte fuel cell can be obtained.

### MEANS OF SOLVING THE PROBLEMS

A first invention according to the present invention is a method for manufacturing a membrane electrode assembly in a polymer electrolyte fuel cell. The method includes at least a first step of applying electrolyte particles and electrode catalyst particles, or a mixture thereof, on an electrolyte membrane to form a laminated body, and a second step of heating the laminated body so that at least the electrolyte particles are melted, and integrally binding the electrolyte membrane and an electrode catalyst layer including the electrode catalyst particles to each other via the molten electrolyte.

In the above invention, the electrolyte membrane is a reinforced electrolyte membrane formed by impregnating a porous reinforced membrane with electrolyte. While such electrolyte that is used for an electrolyte membrane in a conventional polymer electrolyte fuel cell can be suitably used, since a fluorine-type electrolyte formed of a precursor polymer of an electrolyte polymer has heat stability, it is particularly preferable as a material for manufacturing the electrolyte membrane according to the present invention. When such fluorine-type electrolyte is used to obtain the electrolyte membrane, a step (hydrolysis treatment) of providing the electrolyte polymer with ion-exchange properties in accordance with a conventionally known method (a method disclosed in JP Patent Publication (Kokai) No. 9.194609 A (1997), for example) is conducted. Further, while a porous reinforced membrane used in a conventional electrolyte membrane can be suitably used as the porous reinforced membrane, a PTFE porous membrane is particularly preferable.

In the above invention, the electrolyte particles are formed by changing the above electrolyte into particles, preferably, each having a particle diameter of 100 µm or less. More preferably, particles, each having a particle diameter of approximately 0.1 µm to 50 µm, are used. Further, the particle diameter of each of the electrolyte particles on the electrode catalyst particle side is preferably less than that of each of the electrolyte particles on the electrolyte membrane side, and thus, fine particles, each having a particle diameter of 1 µm or less, are used.

In the above invention, the electrode catalyst particles are formed by allowing conductive carries, such as carbons, to support a catalyst component such as platinum, and conventional electrode catalyst particles used in an electrode catalyst layer in a membrane electrode assembly can be used without modification.

The above electrolyte particles and electrode catalyst particles may be individually applied and stacked on the electrolyte membrane. Alternatively, a mixture of the electrolyte particles and the electrode catalyst particles may be formed, so as to apply the mixture on the electrolyte membrane. In either case, the laminated body formed is heated until at least the electrolyte particles are melted. Preferably, at least the surface layer portion of the electrolyte membrane is also melted. While the heating temperature varies depending on the kind of electrolyte, melting can be achieved at a temperature approximately between 200°C and 270°C in the case of the fluorine-type electrolyte. While heating can be carried out in accordance with an arbitrary method, a method in which the laminated body is disposed between a pair of heating plates to carry out heating due to heat from the heating plates is preferable.

The electrolyte, which has been made in a molten state due to the heating of the electrolyte particles, is integrally bound to the surface layer portion of the electrolyte membrane on one side of the electrolyte through impregnation of the inside of the surface layer portion with the electrolyte, while the electrolyte is integrally bound to the electrode catalyst particles on the other side by functioning as a binder, without active application of external pressure in particular. In this way, a membrane electrode assembly used in a polymer electrolyte fuel cell, in which the electrolyte membrane and the electrode catalyst layer including the electrode catalyst particles are integrally bound to each other in a state in which no interlayer boundary is present or in a state in which the boundary, if any, is very subtle, can be obtained. Since active application of external pressure is not necessary in the process of manufacture, damage to the electrolyte membrane can be prevented as much as possible.

The method includes at least a first step of applying electrolyte particles and electrode catalyst particles, or a mixture thereof, on a porous reinforced membrane to form a laminated body, and a second step of heating the laminated body so that the electrolyte particles are melted, impregnating the porous reinforced membrane with the molten electrolyte to form a reinforced electrolyte membrane, without active application of external pressure, and integrally binding the reinforced electrolyte membrane and an electrode catalyst layer including the electrode catalyst particles via the molten electrolyte.
As such porous reinforced membrane, a porous reinforced membrane, such as PTFE porous membrane, used in a conventional electrolyte membrane can be suitably used. An electrolyte and electrode catalyst particles similar to those used in the first invention can be used.

In this invention, the electrolyte particles are melted by heating the laminated body, and the porous reinforced membrane is impregnated with the molten electrolyte on one side, without active application of external pressure, whereby a reinforced electrolyte membrane is formed. Further, the molten electrolyte function as a binder, and thus it integrally binds to the electrode catalyst particles. Thus, as in the first invention, a membrane electrode assembly used in a polymer electrolyte fuel cell, in which the reinforced electrolyte membrane and the electrode catalyst layer including the electrode catalyst particles are integrally bound to each other in a state in which no interlayer boundary is present or in a state in which the boundary, if any, is very subtle, can be obtained. Since active application of external pressure is not carried out in the process of manufacture, damage to the porous reinforced membrane can be substantially prevented.

A step of disposing an electrolyte thin membrane between the porous reinforced membrane and the electrolyte particles may be additionally included in the first step of the second invention. In such case, the electrolyte thin membrane is also melted by heating, together with the electrolyte particles. By impregnating the porous reinforced membrane with the electrolyte formed of the molten electrolyte thin membrane, a reinforced electrolyte membrane with a more stable structure can be obtained, and the integral binding between the reinforced electrolyte membrane and the electrode catalyst layer can be further assured.

When such porous reinforced membrane is used, it takes a long time for the porous reinforced membrane to be impregnated with the molten electrolyte homogeneously. As a variation for solving such matter, at least the above-described second step is carried out under reduced pressure in a sealed space inside which pressure can be reduced. In accordance with this method, by reducing the pressure in the sealed space in which the laminated body is contained, deaeration of the porous reinforced membrane progresses, and deaerated regions are rapidly impregnated with the molten electrolyte. Thus, the manufacturing time for the membrane electrode laminated body can be significantly shortened. Further, the impregnation of the porous reinforced membrane with the molten electrolyte progresses further completely.

As a second invention, the present invention is a method for manufacturing a reinforced electrolyte membrane in a polymer electrolyte fuel cell. The invention discloses a manufacturing method including at least a first step of applying a filmy or particulate electrolyte layer on a porous reinforced membrane to form a laminated body, and a second step of heating the laminated body so that the filmy or particulate electrolyte is melted, and impregnating the porous reinforced membrane with the molten electrolyte, without active application of external pressure.

The present invention corresponds to the reinforced electrolyte membrane part alone in the above first invention. The porous reinforced membrane and electrolyte used herein may be the same as those used in the first invention. Since the porous reinforced membrane is also impregnated with the molten electrolyte without active application of external pressure in this invention, a reinforced electrolyte membrane having an undamaged porous reinforced membrane can be obtained.

In the above second invention as well, it is preferable to carry out at least the second step under reduced pressure in a sealed space inside which pressure can be reduced. Thus, since the deaeration of the porous reinforced membrane and the substitution of molten electrolyte are accelerated, time required for impregnating the porous membrane with molten electrolyte is shortened, whereby a complete impregnation state can be obtained.

Further, in the above second invention, while heating may be carried out in accordance with an arbitrary method, such method is preferable, in which the laminated body is disposed between a pair of heating plates, and heating is carried out by the heat from the heating plates. In such case, a step of disposing heat transfer sheets and/or protective sheets between the heating plates and the laminated body is further included, as a preferable mode. Material having heat resistance and high thermal conductivity, such as copper or aluminum foil, can be used for the heat transfer sheets, and material having a high degree of surface flatness can be used for the protective sheets, such as PTFE resin sheets.

By using such sheets, even when there are variations in the surface properties of the laminated body surface or in the membrane thickness, the filmy or particulate electrolyte layer can be uniformly melted by heating, without active application of surface pressure. Note that the step of disposing the heat transfer sheets and/or protective sheets between the heating plates and the laminated body can be similarly applied to cases in which heating of the laminated body is carried out between the pair of heating plates in accordance with the method for manufacturing a membrane electrode assembly disclosed in the first invention.

### EFFECT OF THE INVENTION

According to the present invention, since a membrane electrode assembly in a polymer electrolyte fuel cell can be manufactured in a state in which no boundary is present between the electrolyte membrane and the electrode catalyst layer or in a state in which the boundary, if any, is very subtle, the interface resistance between individual layers can be reduced, whereby a membrane electrode assembly with high electrical efficiency in a polymer electrolyte fuel cell can be obtained. Further, according to the present invention, the reinforced electrolyte membrane used in the membrane electrode assembly in a polymer electrolyte fuel cell can be manufactured, without causing damage to the porous reinforced membrane. By using such manufactured reinforced electrolyte membrane, a membrane electrode assembly with high electrical efficiency in a polymer electrolyte fuel cell can be obtained.

### BRIEF DESCRIPTION OF THE DRAWINGS

Fig. 1 shows a diagram for explaining an example of a laminated body used for manufacturing a membrane electrode assembly by a method for manufacturing a membrane electrode assembly in a polymer electrolyte fuel cell
Fig. 2 shows a diagram for explaining a process of manufacturing the membrane electrode assembly by using the laminated body shown in Fig. 1.
Fig. 3 shows a diagram for explaining another example of the laminated body used for manufacturing a membrane electrode assembly by a method for manufacturing a membrane electrode assembly in a polymer electrolyte fuel cell
Fig. 4 shows a diagram for explaining a process of manufacturing the membrane electrode assembly by using the laminated body shown in Fig. 3.
Fig. 5 shows a diagram for explaining an example of a process of manufacturing a reinforced electrolyte membrane by a method for manufacturing a reinforced electrolyte membrane in a polymer electrolyte fuel cell according to the present invention.
Fig. 6 shows a drawing for explaining another laminated body when the reinforced electrolyte membrane is manufactured by the manufacturing method shown in Fig. 5.
Fig. 7 shows a diagram for explaining an example of a polymer electrolyte fuel cell.

### EXPLANATION OF LETTERS OR NUMERALS

- A, A1: membrane electrode assembly
- S: sealed space
- 1: electrolyte membrane
- 2: electrolyte particle
- 3: electrolyte fine particle
- 4: electrode catalyst particle
- 5: mixture of electrolyte fine particle and electrode catalyst particle
- 10, 10A: laminated body for membrane electrode assembly
- 20: heating plate device
- 21: lower heating plate
- 22: upper heating plate
- 23: shielding wall
- 24: opening
- 25: vacuum pump
- 30: porous reinforced membrane (PTFE porous membrane)
- 31: electrolyte thin membrane
- 40: laminated body for reinforced electrolyte membrane
- 41: reinforced electrolyte membrane
- 43: protective sheet
- 44: heat transfer sheet
- 45: another laminated body for reinforced electrolyte membrane

### BEST MODES FOR CARRYING OUT THE INVENTION

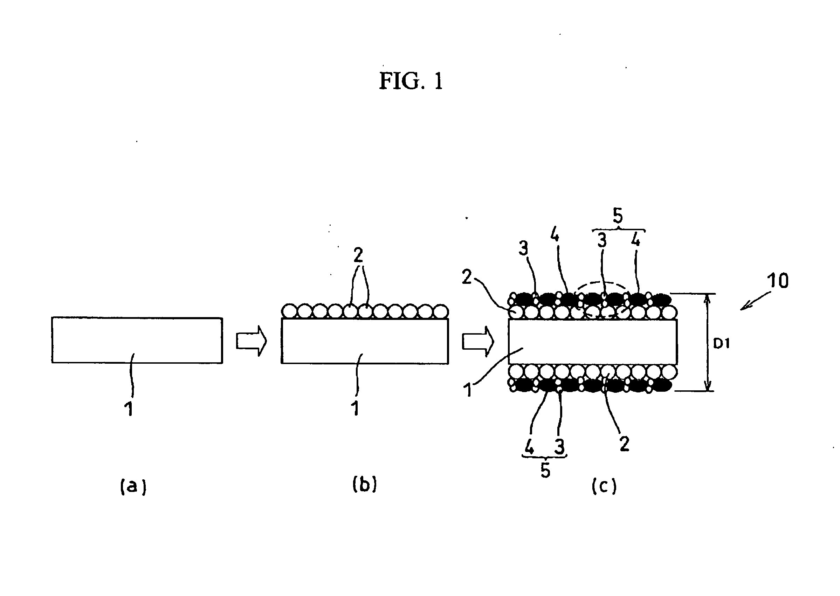

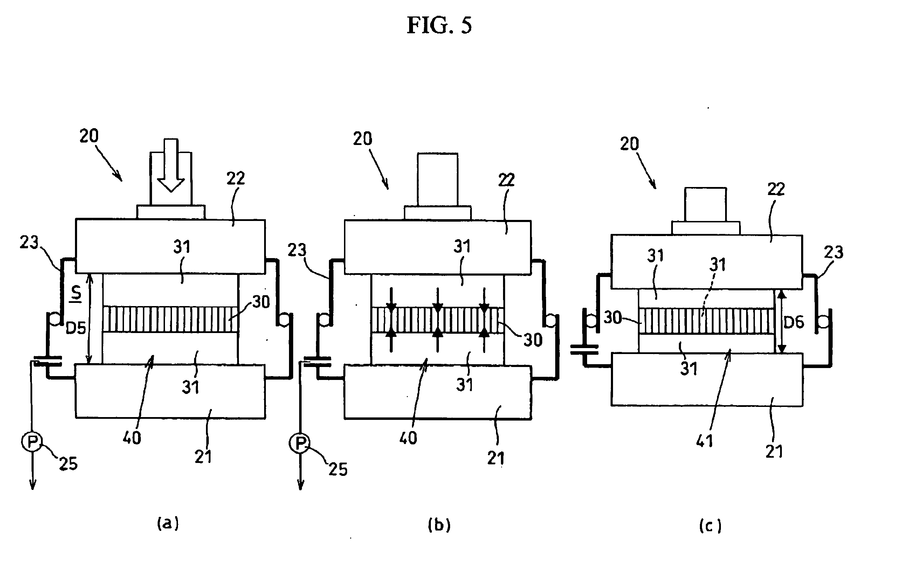

Embodiments of the present invention will be hereafter described with reference to the drawings. Figs. 1 to 4 show diagrams for explaining methods for manufacturing a membrane electrode assembly in a polymer electrolyte fuel cell. Figs. 5 and 6 show diagrams for explaining methods for manufacturing a reinforced electrolyte membrane in a polymer electrolyte fuel cell according to the present invention.

In Fig. 1, reference numeral I denotes an electrolyte membrane, and it is comprised of a thin membrane of ion exchange resin such as Nafion (trade name). Preferably, it is a fluorine-type electrolyte membrane having a thickness of approximately 25 µm to 70 µm (Fig. 1a). Particles 2 (the particle diameter: approximately 0.1 µm to 50 µm) of the same electrolyte are applied on a surface of the electrolyte membrane 1 (Fig. 1b), and a mixture 5 of electrolyte fine particles 3, preferably each having a particle diameter of 1 µm or less, and electrode catalyst particles 4 is applied on the particles 2 (Fig. 1c). The electrode catalyst particles 4 are made by allowing carbon supports to support a catalyst such as platinum. In this way, a membrane electrode assembly having a laminated body 10 with a thickness of D1 prior to heating is formed.

As shown in Fig. 1c, the laminated body 10 may be formed by applying the electrolyte particles 2 and the mixture 5 on both surfaces of the electrolyte membrane 1. Alternatively, the laminated body 10 may be formed by applying them on one surface alone. Further, while not shown, a thin membrane of the same electrolyte may be disposed, instead of the electrolyte particles 2, or between the electrolyte membrane layer 1 and the layer of electrolyte particles 2. Furthermore, when particles, each having a relatively small particle diameter, are used as the electrolyte particles 2, the electrode catalyst particles 4 alone may be applied, instead of the mixture 5.

Next, the above-mentioned laminated body 10 is heated until at least the electrolyte particles 2 and 3 applied on the electrolyte membrane 1 are melted. Preferably, the surface layer part of the electrolyte membrane 1 is also melted. Further, when an electrolyte thin membrane is disposed, the thin membrane is also melted.

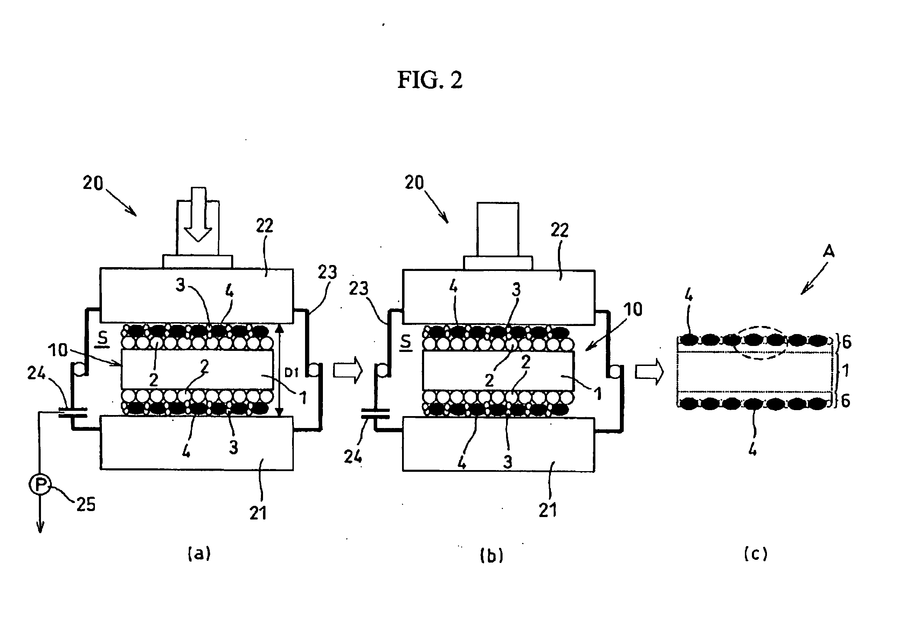

Fig. 2 shows a case in which a heating plate device 20 is used as an example in which the laminated body 10 is heated. The heating plate device 20 includes a lower heating plate 21 and an upper heating plate 22, and the position of the upper heating plate 21 is adapted to be controlled by a control mechanism equipped with a servo-motor (not shown) in units of µm. The space between the lower heating plate 21 and the upper heating plate 22 is covered with a shielding wall 23, and a sealed space S is formed therein. Furthermore, a vacuum pump 25 is connected to an opening 24 formed in a portion of the shielding wall 23, so that the pressure in the sealed space S can be reduced.

The upper and lower heating plates 21 and 22 are separated, and the above-mentioned laminated body 10 is placed on the lower heating plate 21. The control mechanism is operated so that the upper heating plate 22 is brought down until the distance between the upper and lower heating plates becomes D1, which is the thickness of the laminated body 10. Thus, the upper and lower surfaces of the laminated body 10 become in a state in which they are in contact with the surfaces of the upper and lower heating plates 21 and 22 under no external pressure (Fig. 2a). Next, preferably, the distance between the upper and lower plates is narrowed by a few µm, and the upper plate is then temporarily stopped (Fig. 2b). In this way, the surface variations of the laminated body 10 can be removed without substantial change in the thickness dimension of the laminated body 10, whereby heat transfer properties during heating can be equalized.

The heating plates are heated to 200°C to 270 °C. Heat from the heating plates is gradually conducted from the surfaces of the laminated body 10 to the inside thereof. The laminated body 10 is heated until the electrolyte fine particles 3 in the above mixture 5, the electrolyte particles 2 applied on the surface of the electrolyte membrane 1, and preferably, the surface layer parts of the electrolyte membrane 1 in the laminated body 10 are melted by using the control mechanism. Since an amount of decrease in the volume of the electrolyte particles associated with heating and melting can be calculated in advance, the upper heating plate 22 is brought down by the control mechanism in view of such amount of decrease.

By maintaining such state for a while, the surface layer portions of the electrolyte membrane 1 are impregnated with the electrolyte formed by heating and melting the electrolyte particles 2 and the electrolyte fine particles 3. The electrolyte is integrally bound to the electrolyte membrane 1 on one side, while it is integrally bound to the electrode catalyst particles 4 on the other side by functioning as a binder, without active application of external pressure. While depressurization of the sealed space S is unnecessary in this example, the pressure in the sealed space S may be slightly decreased during heating. In this way, individual layers can be further integrally bound to each other. Further, when depressurization is not conducted, the shielding wall 23 can be omitted.

After the shape of the laminated body 10 is maintained by cooling, the space S is opened, and the laminated body 10 is retrieved. Thus, as shown in Fig. 2c, the electrolyte membrane 1 and an electrode catalyst layer 6 are integrally bound in a state in which no boundary is present, and therefore the interlayer joining strength is significantly improved, whereby a membrane electrode assembly A having a reduced interface resistance can be manufactured. Note that, while not shown, when a fluorine-type electrolyte is used as the electrolyte, a step (hydrolysis treatment) of providing the electrolyte polymer with ion-exchange properties is conducted in accordance with a conventionally known method.

In accordance with the above manufacturing method, since active application of external pressure is not particularly necessary in the process of manufacture, damage to the electrolyte membrane I in the manufactured membrane electrode assembly A can be prevented as much as possible, whereby a membrane electrode assembly with high electrical efficiency can be obtained. Note that a substantially equivalent membrane electrode assembly A can be also obtained when a slight pressure having such degree that the electrolyte membrane 1 is not damaged is applied.

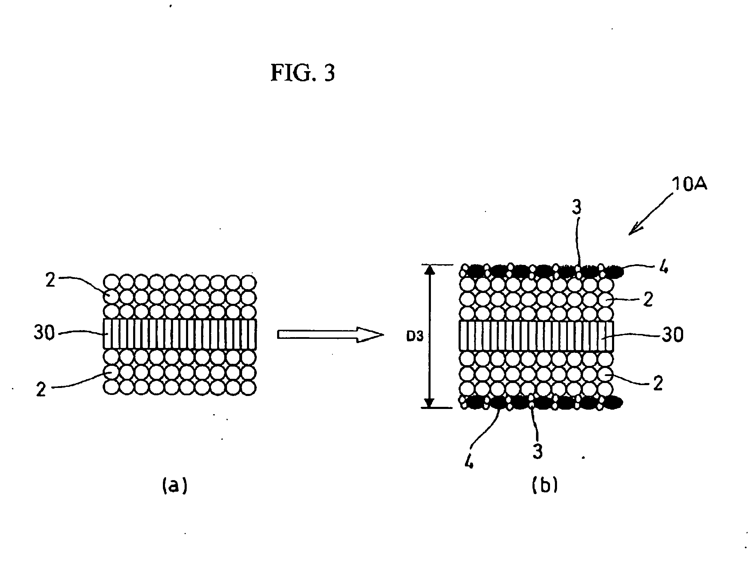

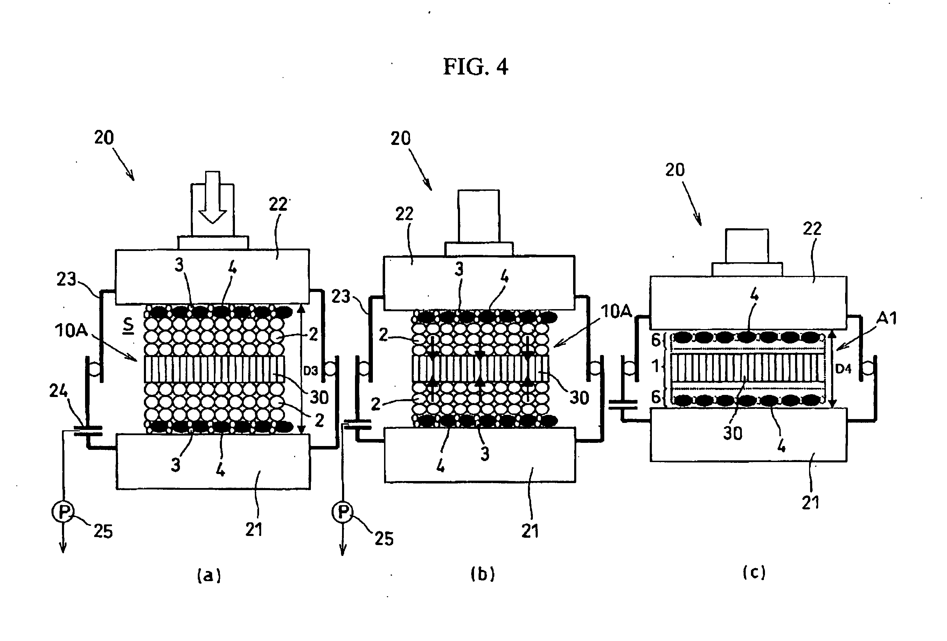

Figs. 3 and 4 show diagrams for explaining a mode in which the membrane electrode assembly A1 adopting a reinforced electrolyte membrane as the electrolyte membrane is manufactured. In Figs. 3 and 4, reference numeral 30 denotes a porous reinforced membrane such as a PTFE porous membrane, and the electrolyte particles 2 are applied to the surfaces thereof. The application amount is set in consideration of the impregnation amount of the porous reinforced membrane 30. Thus, the amount (Fig. 3a) becomes larger, as compared with the amount in the case of the membrane electrode assembly A explained with Figs. 1 and 2.

The mixture 5 of the electrolyte fine particles 3 and the electrode catalyst particles 4 is applied on the layer of applied electrolyte particles 2 in the same manner as described above, so as to form a laminated body 10A (Fig. 1b). The thickness D3 of the laminated body 10A is thicker than the thickness D1 of the above laminated body 10.

Next, the above laminated body 10A is heated by using the heating plate device 20. Namely, the upper and lower heating plates 21 and 22 are separated, and the above-mentioned laminated body 10A is placed on the lower heating plate 21. The control mechanism is operated so as to bring down the upper heating plate 22 until the distance between the upper and lower heating plates becomes D3, which is the thickness of the laminated body 10A. Thus, the upper and lower surfaces of the laminated body 10A become in a state in which they are in contact with the surfaces of the upper and lower heating plates 21 and 22 under no external pressure (Fig. 4a). Next, preferably, the distance between the upper and lower plates is narrowed by a few µm, and the upper plate is then temporarily stopped (Fig. 4b). In this way, since the surface variations are corrected, the equalization of heat transfer properties and the flow properties of electrolyte resin during heating can be improved, as in the case of the laminated body 10.

In such state, the heating plates are heated to 200°C to 270°C in the same way as described above. The electrolyte particles 2 and electrolyte fine particles 3 are melted by heating, and the molten electrolyte resin is integrally bound to the electrode catalyst particles 4 as it functions as a binder, as in the case of the laminated body 10. The electrolyte particles 2 applied on the porous reinforced membrane 30 are also melted by heating, and the porous reinforced membrane 30 is impregnated therewith. While impregnation progresses by naturally leaving the porous reinforced membrane 30, it requires a long time. Thus, in this case, the vacuum pump 25 is activated, so as to actively decrease the pressure of the sealed space S in the shielding wall 23. Due to such depressurization, the deaeration of the fine pores in the porous reinforced membrane 30 is accelerated, and therefore the fine pores are impregnated with molten electrolyte resin within a short time.

Since the progress of impregnation with resin and an amount of decrease in the volume of the electrolyte particles associated with heating and melting can be calculated in advance, the upper heating plate 22 is brought down by the control mechanism in view of the amount of decrease (Fig. 4c). After the shape of the laminated body 10A is maintained by cooling, the space S is opened, and the laminated body 10A is retrieved. Thus, the electrolyte membrane 1 having the porous reinforced membrane 30 and an electrode catalyst layer 6 are integrally bound in a state in which no boundary is present, and the interlayer joining strength is significantly improved, whereby the membrane electrode assembly A1 having a reduced interface resistance, a thickness of D4, and a reinforced electrolyte membrane can be manufactured.

In this membrane electrode assembly A1, since no pressure is actively applied in the step of impregnating the porous reinforced membrane 30 with molten electrolyte resin, it is possible to effectively prevent the porous reinforced membrane 30 from being damaged.

Figs. 5 and 6 show methods for manufacturing the reinforced electrolyte membrane in a polymer electrolyte fuel cell, in substantially the same manner as above. In the example shown in Fig. 5, the porous reinforced membrane 30 used for manufacturing the membrane electrode assembly A1 including the above reinforced electrolyte membrane is used as the porous reinforced membrane 30. A laminated body 40 formed by accumulating the electrolyte thin membranes 31, 31 on both surfaces of the porous reinforced membrane 30 is adjusted in advance. By processing the laminated body 40 with the above heating plate device 20, the electrolyte resin is melted by heating and the porous reinforced membrane 30 is impregnated with the molten resin.

Namely, the laminated body 40 with a thickness of D5 is disposed between the lower heating plate 21 and the upper heating plate 22 without applying pressure (Fig. 5a), and the surface variations are then eliminated by narrowing the distance by a few µm (Fig. 5b). The upper heating plate 22 is brought down with the control mechanism while actively decreasing the pressure of the sealed space S in the shielding wall 23 by activating the vacuum pump 25, in view of a previously determined amount of decrease in the volumes of porous membranes 31, 31 due to impregnation with resin (Fig. 5c). Next, after the shape of the laminated body 40 is maintained by cooling, the space S is opened, and the laminated body 40 is retrieved. Thus, a reinforced electrolyte membrane 41 with a thickness of D6 having the porous reinforced membrane 30 can be obtained. Since the laminated body 40 is not actively subjected to external pressure in the process of manufacture, the reinforced electrolyte membrane 41 having an undamaged reinforced membrane 30 can be obtained.

Fig. 6 shows a diagram for explaining another mode for manufacturing the above-described reinforced electrolyte membrane 41. In this example, after the laminated body 40 formed by accumulating the electrolyte thin membranes 31, 31 on both surfaces of the porous reinforced membrane 30 is adjusted, protective sheets 43, which are PTFE resin sheets, are stacked on both surfaces thereof. Next, heat transfer sheets 44, such as copper sheets, are further stacked thereon, so as to form a laminated body 45. As in the same manner as described with Fig. 5, this laminated body 45 is disposed between the lower heating plate 21 and the upper heating plate 22 without applying pressure. Next, the electrolyte resin is melted and the porous reinforced membrane 30 is impregnated with the molten resin in the same manner. After a required impregnation is achieved, the shape of the laminated body 40 is maintained by cooling, and the space S is then opened to retrieve the laminated body 45. The reinforced electrolyte membrane 41 can be then obtained by separating the protective sheets 43 and heat transfer sheets 44 from the laminated body 45.

In this example, by stacking the protective sheets 43, the surface properties of the electrolyte thin membranes 31 of the laminated body 40 can be made uniformly even, without surface variations. Further, by stacking the heat transfer plates 44, heat to the electrolyte thin membranes 31 can be uniformly transferred. Thus, the resin flow properties can be further improved, and a reinforced electrolyte membrane 41 with a higher performance can be obtained.

Meanwhile, in the examples shown in Figs. 5 and 6, while the electrolyte thin membranes 31 are exemplified as electrolyte resin, electrolyte particles as used in the manufacture of the membrane electrode assemblies A and A1 can be used, instead of the electrolyte thin membranes 31. Further, the electrolyte thin membranes 31 to which electrolyte particles are applied may be stacked on the electrolyte thin membrane 31.

Further, in this case again, when a fluorine-type electrolyte is used as electrolyte, the step (hydrolysis treatment) of providing the electrolyte polymer with ion-exchange properties is conducted with respect to the manufactured reinforced electrolyte membrane 41 in accordance with a conventionally known method.

## Claims

1. A method for manufacturing a membrane electrode assembly in a polymer electrolyte fuel cell, comprising at least:
a first step of applying electrolyte particles and electrode catalyst particles, or a mixture thereof, on a porous reinforced membrane, so as to form a laminated body; and
a second step of heating the laminated body so that the electrolyte particles are melted, impregnating the porous reinforced membrane with the molten electrolyte, so as to form a reinforced electrolyte membrane, without active application of external pressure, and integrally binding the reinforced electrolyte membrane and an electrode catalyst layer including the electrode catalyst particles to each other via the molten electrolyte.

2. The method for manufacturing a membrane electrode assembly in a polymer electrolyte fuel cell according to claim 1, wherein the first step further comprises a step of disposing an electrolyte thin membrane between the porous reinforced membrane and the electrolyte particles, and the electrolyte thin membrane is also melted by heating, so that the porous reinforced membrane is impregnated with the molten electrolyte, without active application of external pressure.

3. The method for manufacturing a membrane electrode assembly in a polymer electrolyte fuel cell according to claim 1 or 2, wherein at least the second step is carried out under reduced pressure in a sealed space inside which pressure can be reduced.

4. The method for manufacturing a membrane electrode assembly in a polymer electrolyte fuel cell according to any one of claims 1 to 3, wherein the electrolyte is a fluorine-type electrolyte, and a third step of providing the electrolyte polymer with ion-exchange properties is further included.

5. A method for manufacturing a reinforced electrolyte membrane in a polymer electrolyte fuel cell, the method comprising at least:
a first step of applying a filmy or particulate electrolyte to a porous reinforced membrane, so as to form a laminated body; and
a second step of heating the laminated body so that the filmy or particulate electrolyte is melted, and impregnating the porous reinforced membrane with the molten electrolyte, without active application of external pressure.

6. The method for manufacturing a reinforced electrolyte membrane in a polymer electrolyte fuel cell according to claim 5, wherein at least the second step is carried out under reduced pressure in a sealed space inside which pressure can be reduced.

7. The method for manufacturing a reinforced electrolyte membrane in a polymer electrolyte fuel cell according to claim 5 or 6, wherein the heating of the laminated body is carried out between heating plates.

8. The method for manufacturing a reinforced electrolyte membrane in a polymer electrolyte fuel cell according to claim 7, wherein a step of disposing heat transfer sheets and/or protective sheets between the heating plates and the laminated body is further included.

9. The method for manufacturing a reinforced electrolyte membrane in a polymer electrolyte fuel cell according to any one of claims 5 to 8, wherein the electrolyte is a fluorine-type electrolyte, and a third step of providing the electrolyte polymer with ion-exchange properties is further included.

## Patentansprüche

1. Verfahren zum Herstellen einer Membran-Elektroden-Einheit in einer Polymerelektrolyt-Brennstoffzelle, umfassend wenigstens:
einen ersten Schritt, in dem Elektrolytpartikel und Elektrodenkatalysatorpartikel oder eine Mischung derselben auf eine poröse verstärkte Membran aufgebracht werden, so dass ein laminierter Körper gebildet wird; und
einen zweiten Schritt, in dem der laminierte Körper erwärmt wird, so dass die Elektrolytpartikel geschmolzen werden, in dem die poröse verstärkte Membran mit dem geschmolzenen Elektrolyt imprägniert wird, so dass eine verstärkte Elektrolytmembran ohne aktives Anlegen von äußerem Druck gebildet wird, und
in dem die verstärkte Elektrolytmembran und eine die Elektrodenkatalysatorpartikel einschließende Elektrodenkatalysatorschicht über den geschmolzenen Elektrolyt integral miteinander verbunden werden.

2. Verfahren zum Herstellen einer Membran-Elektroden-Einheit in einer Polymerelektrolyt-Brennstoffzelle nach Anspruch 1, wobei der erste Schritt ferner einen Schritt umfasst, in dem eine dünne Elektrolytmembran zwischen der porösen verstärkten Membran und den Elektrolytpartikeln angeordnet wird und die dünne Elektrolytmembran ebenfalls durch Erwärmen geschmolzen wird, so das die poröse verstärkte Membran mit dem geschmolzenen Elektrolyt ohne aktives Anlegen von äußerem Druck imprägniert wird

3. Verfahren zum Herstellen einer Membran-Elektroden-Einheit in einer Polymerelektrolyt-Brennstoffzelle nach Anspruch 1 oder 2, wobei wenigstens der zweite Schritt unter verringertem Druck in einem abgedichteten Raum durchgeführt wird, in dem der Druck verringert werden kann.

4. Verfahren zum Herstellen einer Membran-Elektroden-Einheit in einer Polymerelektrolyt-Brennstoffzelle nach einem der Ansprüche 1 bis 3, wobei der Elektrolyt ein Fluor-Elektrolyt ist, und ferner ein dritter Schritt eingeschlossen ist, in dem das Elektrolytpolymer mit Ionenaustausch-Eigenschaften versehen wird.

5. Verfahren zum Herstellen einer verstärkten Elektrolytmembran in einer Polymerelektrolyt-Brennstoffzelle, wobei das Verfahren wenigstens folgendes umfasst:
einen ersten Schritt, in dem ein hauchdünner oder partikulärer Elektrolyt auf eine poröse verstärkte Membran aufgebracht wird, so dass ein laminierter Körper gebildet wird; und
einen zweiten Schritt, in dem der laminierte Körper erwärmt wird, so dass der hauchdünne oder partikuläre Elektrolyt geschmolzen wird, und in dem die poröse verstärkte Membran mit dem geschmolzenen Elektrolyt ohne aktives Anlegen von äußerem Druck imprägniert wird.

6. Verfahren zum Herstellen einer verstärkten Elektrolytmembran in einer Polymerelektrolyt-Brennstoffzelle nach Anspruch 5, wobei wenigstens der zweite Schritt unter verringertem Druck in einem abgedichteten Raum durchgeführt wird, in dem der Druck verringert werden kann.

7. Verfahren zum Herstellen einer verstärkten Elektrolytmembran in einer Polymerelektrolyt-Brennstoffzelle nach Anspruch 5 oder 6, wobei das Erwärmen des laminierten Körpers zwischen Heizelementen durchgeführt wird.

8. Verfahren zum Herstellen einer verstärkten Elektrolytmembran in einer Polymerelektrolyt-Brennstoffzelle nach Anspruch 7, wobei ferner ein Schritt eingeschlossen ist, in dem Wärmeaustauschplatten und/oder Schutzplatten zwischen den Wärmeplatten und dem laminierten Körper angeordnet werden.

9. Verfahren zum Herstellen einer verstärkten Elektrolytmembran in einer Polymerelektrolyt-Brennstoffzelle nach einem der Ansprüche 5 bis 8, wobei der Elektrolyt ein Fluor-Elektrolyt ist, und ferner ein dritter Schritt eingeschlossen ist, in dem das Elektrolytpolymer mit Ionenaustausch-Eigenschaften versehen wird.

## Revendications

1. Procédé de fabrication d'un ensemble d'électrode à membrane dans une pile à combustible à électrolyte en polymère, comportant au moins :
une première étape d'application de particules d'électrolyte et de particules de catalyseur d'électrode, ou un mélange de celles-ci, sur une membrane renforcée poreuse, de façon à former un corps stratifié ; et
une deuxième étape de chauffage du corps stratifié de telle sorte que les particules d'électrolyte sont fondues, en imprégnant la membrane renforcée poreuse avec l'électrolyte fondu, de façon à former une membrane d'électrolyte renforcée, sans application active de pression externe, et en liant intégralement la membrane d'électrolyte renforcée et une couche de catalyseur d'électrode comprenant les particules de catalyseur d'électrode l'une à l'autre par l'intermédiaire de l'électrolyte fondu.

2. Procédé de fabrication d'un ensemble d'électrode à membrane dans une pile à combustible à électrolyte en polymère selon la revendication 1, selon lequel la première étape comporte en outre une étape de disposition d'une membrane mince d'électrolyte entre la membrane renforcée poreuse et les particules d'électrolyte, et la membrane mince d'électrolyte est également fondue par chauffage, de telle sorte que la membrane renforcée poreuse est imprégnée de l'électrolyte fondu, sans application active de pression externe.

3. Procédé de fabrication d'un ensemble d'électrode à membrane dans une pile à combustible à électrolyte en polymère selon la revendication 1 ou 2, selon lequel au moins la deuxième étape est réalisée sous une pression réduite dans un espace étanche à l'intérieur duquel la pression peut être réduite.

4. Procédé de fabrication d'un ensemble d'électrode à membrane dans une pile à combustible à électrolyte en polymère selon l'une quelconque des revendications 1 à 3, selon lequel l'électrolyte est un électrolyte du type fluor, et une troisième étape consistant à pouvoir le polymère d'électrolyte de propriétés d'échange d'ion est en outre incluse.

5. Procédé de fabrication d'une membrane d'électrolyte renforcée dans une pile à combustible à électrolyte en polymère, le procédé comportant au moins :
une première étape d'application d'un électrolyte en forme de film ou en particules sur une membrane renforcée poreuse, de façon à former un corps stratifié ; et
une deuxième étape de chauffage du corps stratifié de telle sorte que l'électrolyte en forme de film ou en particules est fondu, et d'imprégnation de la membrane renforcée poreuse avec l'électrolyte fondu, sans application active de pression externe.

6. Procédé de fabrication d'une membrane d'électrolyte renforcée dans une pile à combustible à électrolyte en polymère selon la revendication 5, selon lequel au moins la deuxième étape est réalisée sous une pression réduite dans un espace étanche à l'intérieur duquel la pression peut être réduite.

7. Procédé de fabrication d'une membrane d'électrolyte renforcée dans une pile à combustible à électrolyte en polymère selon la revendication 5 ou 6, selon lequel le chauffage du corps stratifié est réalisé entre des plaques de chauffage.

8. Procédé de fabrication d'une membrane d'électrolyte renforcée dans une pile à combustible à électrolyte en polymère selon la revendication 7, selon lequel une étape consistant à disposer des feuilles de transfert de chaleur et/ou des feuilles de protection entre les plaques de chauffage et le corps stratifié est en outre incluse.

9. Procédé de fabrication d'une membrane d'électrolyte renforcée dans une pile à combustible à électrolyte en polymère selon l'une quelconque des revendications 5 à 8, selon lequel l'électrolyte est un électrolyte du type fluor, et une troisième étape consistant à pourvoir le polymère d'électrolyte de propriétés d'échange d'ion est en outre incluse.
